# EUROPEAN PATENT APPLICATION

(11) **EP 2 133 608 A1**
(43) Date of publication of application: **16.12.2009**
(21) Application number: 08157852.8
(22) Date of filing: 09.06.2008
(51) Int. Cl.: F16K 1/226

(54) **Butterfly valve**

(71) Applicant: Chi Men Precision Co., Ltd., Kao-Hsiung County Tai-Liao Town (TW)
(72) Inventor: Tsai, Chi-Lung, Tai-Liao Town (TW)
(74) Representative: Viering, Jentschura & Partner

(57) **Abstract**

A butterfly valve includes a main body (2) and a valve plate (4). The main body is provided with a valve port (20) and a handle (3) fixed with a shaft (30) for connecting a handle with the valve plate that is received in the valve port of the main body. Before the valve plate is shaped, a sealing ring (43) is deposited in the shaping cavity of a valve plate shaping mold, and after the valve plate is shaped, the sealing ring will be secured at the periphery of the valve face for achieving sealing effect and preventing liquid from leaking when the valve plate is closed. Further, the valve face (40) has one side bored with a shaft hole (45) at a location eccentric to the center of the valve face. Thus, when the handle (3) is operated, the valve plate (4) can be turned to open or close smoothly.

## Description

### BACKGROUND OF THE INVENTION

### 1. Field of the Invention

This invention relates to a butterfly valve, particularly to one having a sealing ring secured on the periphery of the valve face of a valve plate, enabling the valve plate to be opened or closed smoothly and enhancing effect of leakage prevention. Before the valve plate is shaped, the sealing ring is in advance deposited in the shaping cavity of a valve plate shaping mold, and after the valve plate is injection molded with plastic material, the sealing ring can completely and firmly be fixed on the periphery of the valve face.

### 2. Description of the Prior Art

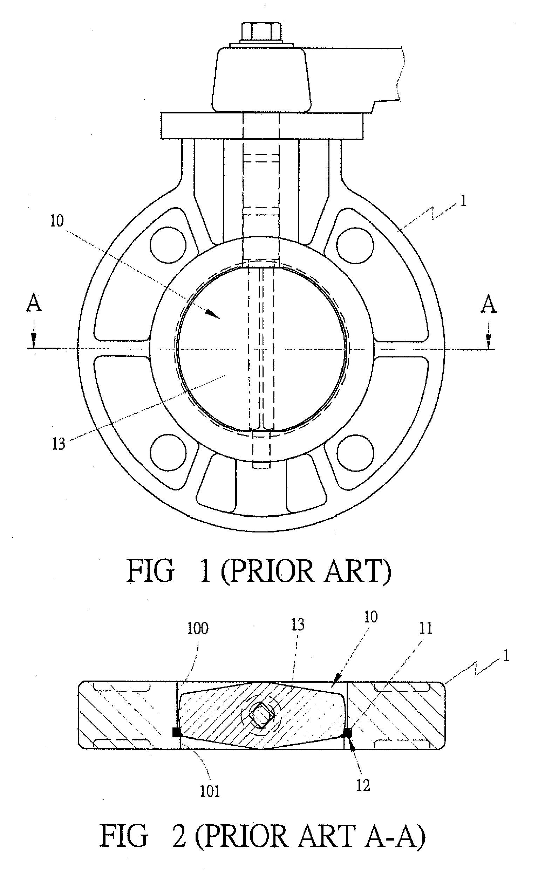

Referring to Figs. 1 and 2, a conventional butterfly valve formerly devised by the inventor of this invention includes a main body 1 provided with a valve port 10 having its inner wall formed with a large-diametrical periphery 100 and a small-diametrical periphery 101. A receiving groove 12 is disposed at an adjacent portion of the large-diametrical and the small-diametrical periphery 100 and 101 for receiving a sealing ring 11 to be resisted by the large-diametrical periphery 100 and fixedly positioned in the receiving groove 12 for producing a marked effect of sealing. The valve port 10 is disposed inside with a valve plate 13 having its periphery secured with the sealing ring 11 for stopping liquid from leaking.

However, the conventional butterfly valve has the following drawbacks.
1. The valve port of the main body has to be disposed with the large-diametrical periphery and small-diametrical periphery for installing the sealing ring; therefore, the cost of producing a mold available for injection molding the main body with plastic material is comparatively high.
2. Both the valve port of the main body and the receiving groove for receiving the sealing ring have to be shaped at the same time, thus lowering velocity of injection molding the main body.
3. The sealing ring received in the receiving groove is likely to fall off after being used for a long period of time, rendering the valve plate of the butterfly valve impossible to shut completely and tightly for preventing liquid from leaking.

### SUMMARY OF THE INVENTION

The objective of this invention is to offer a butterfly valve having a sealing ring and a valve plate, with the sealing ring secured on the periphery of the valve plate and closely contact with the inner wall of a valve port for producing excellent effect of sealing.

The special features of this invention are described as follows.
1. The diameters of the front and the rear inner wall of the valve port are the same in size, able to lower the cost of producing a main-body shaping mold and elevate velocity of manufacturing the butterfly valve.
2. Before the valve plate in the valve port of the main body is shaped, the sealing ring is in advance placed in the shaping cavity of a valve-plate shaping mold, and after the valve plate is shaped, the sealing ring can be completely secured on the periphery of the valve face of the valve plate, enabling the valve plate to close the valve port tightly for preventing liquid from leaking.
3. The sealing ring of the butterfly valve can be made of acid-resisting and alkali-resisting material, such as Teflon, or made of plastic or silica gel according to different uses of the butterfly valve.
4. The valve face of the valve plate is bored with a shaft hole at a location eccentric to the center point of the valve face, enabling a handle to be operated to open or close the valve plate smoothly and quickly.

### BRIEF DESCRIPTION OF DRAWINGS

This invention will be better understood by referring to the accompanying drawings, wherein:
Fig. 1 is a front view of a conventional butterfly valve;
Fig. 2 is a cross-sectional view of the line A-A in Fig. 1;
Fig. 3 is a front view of a butterfly valve in the present invention;
Fig. 4 is a cross-sectional view of the line B-B in Fig. 3;
Fig. 5 is a cross-sectional view of the butterfly valve shown in Fig. 4 in an operating condition in the present invention;
Fig. 6 is an upper view of the valve plate of the butterfly valve in the present invention;
Fig. 7 is a rear view of the valve plate of the butterfly valve in the present invention;
Fig. 8 is a cross-sectional view of the line C-C in Fig. 7; and
Fig. 9 is a cross-sectional view of the line D-D in Fig. 7.

### DETAILED DESCRITPION OF THE PREFERRED EMBODIMENT

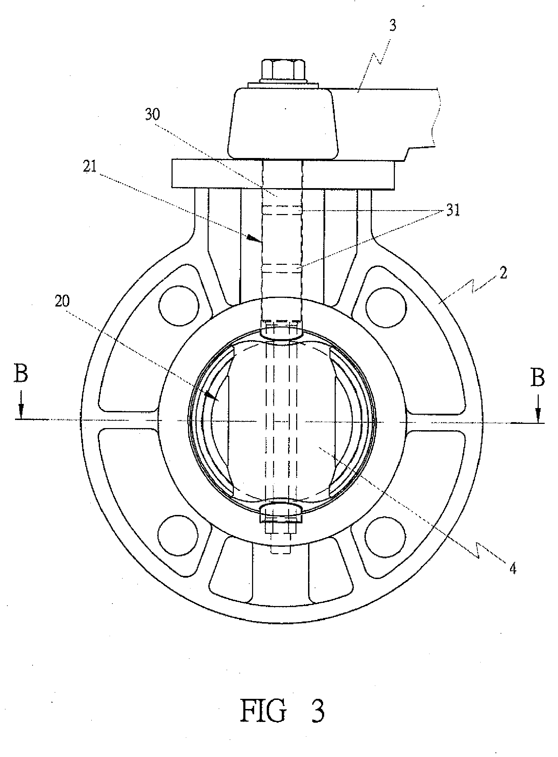

A preferred embodiment of a butterfly valve in the present invention, as shown in Figs. 3, 4 and 5, includes a main body 2 and a valve plate 4 as main components combined together.

The main body 2 is formed integral with a valve port 20 whose inner wall 200 defines a straight through hole so the diameters of the front and the rear inner wall 200 of the valve port 20 are of a same size. Thus, a shaping mold for injection molding the main body 2 can conveniently be developed and produced, and the main body can quickly and stably be injection molded with plastic material. Further, the main body 2 is bored with a receiving hole 21 for receiving the shaft 30 of a handle 3. After the shaft 30 of the handle 3 is inserted through the receiving hole 21 from the upper end of the main body 2 and through the shaft hole of the valve plate 4, the handle 3 can be operated to turn and open or close the valve plate 4. The shaft 30 of the handle 3 is fixed thereon with plural leakage-stopping gaskets 31 for preventing liquid from leaking and enabling the handle 3 to turn the valve plate 4 smoothly and quickly.

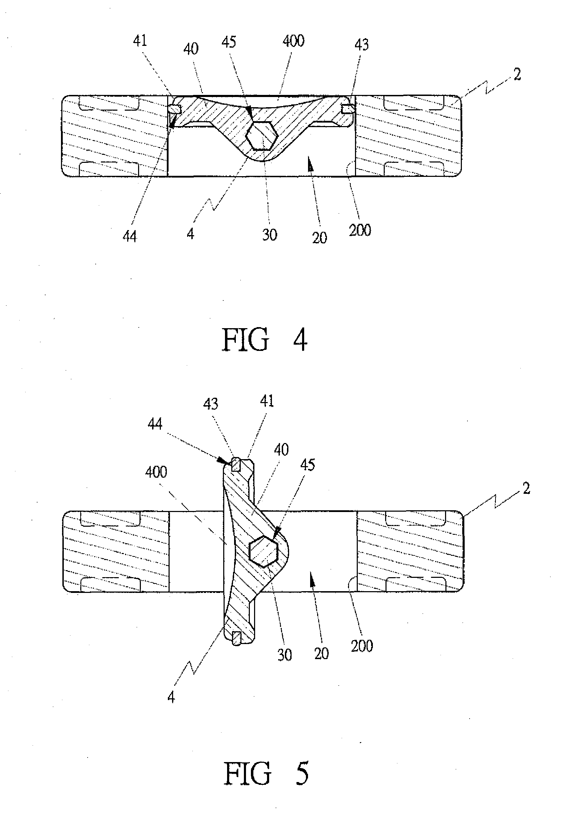

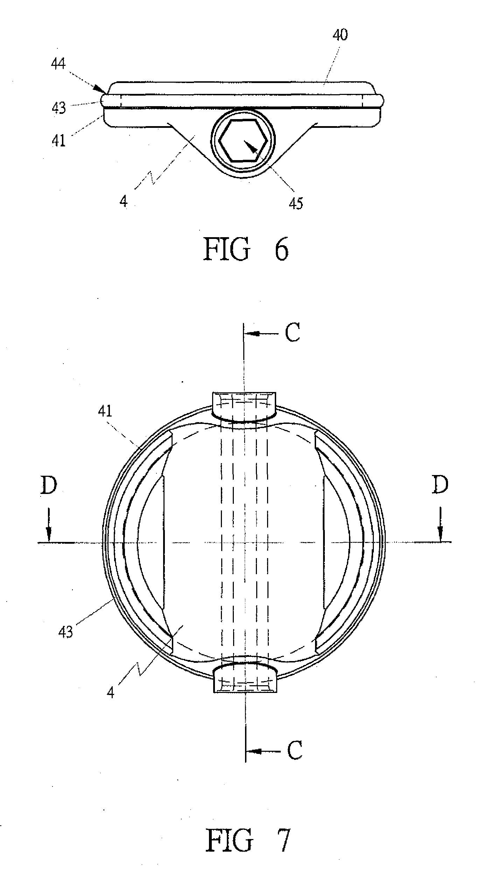

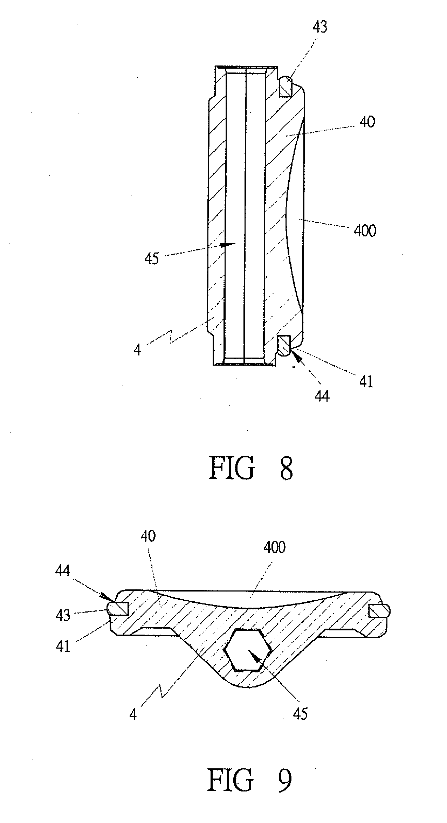

The valve plate 4 formed integrally and assembled at the valve port 20 of the main body 2 is formed with a valve face 40 disposed with a concave groove 400, as shown in Figs. 6-9. When the valve plate 4 and the valve port 20 are in a closed state, as shown in Fig. 4, the concave groove 400 can completely stop liquid from striking the valve plate 4 and produce buffer effect for avoiding liquid pressure that can destroy the structure of the valve plate 4. Further, the periphery of the valve face 40 of the valve plate 4 is fixed thereon with a sealing ring 43, which can be made of acid-resisting and alkali-resisting material, such as Teflon, or made of plastic or silica gel in accordance with different uses. The sealing ring 43 is received in the sealing ring groove 44 around the periphery 41 of the valve face 40. When the valve plate 4 is integrally shaped, the sealing ring 43 is combined together with the sealing ring groove 44 of the periphery 41 of the valve face 40; therefore, the sealing ring 43 can be completely and firmly secured in the sealing ring groove 44 of the valve face 40 and impossible to fall off the sealing ring groove 44. Thus, the valve plate 4 of the butterfly valve in the present invention can be operated to completely and tightly close the valve port 20, having excellent sealing effect, enhancing efficacy of leakage prevention, and reinforcing the structure and elevating the quality of the butterfly valve. In addition, the sealing ring 43 is fixed on the peripheral side of the valve plate 4 and injection molded integrally with the valve plate 4; therefore, when the butterfly valve is to be assembled, it is needless to assemble the sealing ring 43 and the valve plate 4 separately, enabling the butterfly valve to be assembled quickly and smoothly.

Referring to Figs. 6∼9, the valve plate 4 is bored with a shaft hole 45 at one side of the valve face 40 and positioned eccentrically to the center point (R) of the valve face 4. Thus, as shown in Figs. 3, 4 and 5, after inserted downward through both the receiving hole 21 of the main body 2 and the shaft hole 45 of the valve plate 4, the shaft 30 of the handle 3 is combined with the valve plate 4 in an eccentric state. By so designing, when liquid pressure in the interior of the valve port 20 becomes comparatively high, the handle 3 still can be operated smoothly to turn the valve plate 4 to open or close, convenient in operation.

While the preferred embodiment of the invention has been described above, it will be recognized and understood that various modifications may be made therein and the appended claims are intended to cover all such modifications that may fall within the spirit and scope of the invention.

## Claims

1. A butterfly valve comprising:
a main body provided with a valve port and a receiving hole for receiving a shaft of a handle, said shaft of said handle inserted through said receiving hole of said main body and a shaft hole of a valve plate; and
a valve plate formed integrally and assembled in said valve port of said main body, said valve plate formed with a valve face having its periphery fixed thereon with a sealing ring made of acid-resisting and alkali-resisting material, said sealing ring positioned in a sealing ring groove of a periphery of said valve face, said sealing ring firmly combined with said sealing ring groove when said valve plate is integrally shaped.

2. The butterfly valve as claimed in Claim 1, wherein an inner wall of said valve port of said main body defines a through hole, and the diameters of the front and the rear inner wall of said valve port are of a same size.

3. The butterfly valve as claimed in Claim 1, wherein said shaft of said handle is fixed thereon with plural leakage-stopping gaskets.

4. The butterfly valve as claimed in Claim 1, wherein said valve face of said valve plate is disposed with a concave groove for completely stopping liquid from striking said valve plate.

5. The butterfly valve as claimed in Claim 1, wherein said valve plate has a shaft hole bored at one side of said valve face and positioned eccentrically to a center point (R) of said valve face.
